# EUROPEAN PATENT SPECIFICATION

(11) **EP 2 223 224 B1**
(45) Date of publication and mention of the grant of the patent: **01.06.2011**
(21) Application number: 08851995.4
(22) Date of filing: 19.11.2008
(51) Int. Cl.: G06F 13/16

(54) **SCHEDULING BASED ON TURNAROUND EVENT**
SCHEDULING AUF DER BASIS EINES TURNAROUND-EREIGNISSES
PLANIFICATION BASÉE SUR UN ÉVÉNEMENT DE RETOURNEMENT

(30) Priority: 19.11.2007 US 988878 P
(43) Date of publication of application: 01.09.2010
(73) Proprietor: Rambus Inc., Sunnyvale, CA 94089 (US)
(72) Inventor: PEREGO, Richard, E., Los Altos, California 94022 (US)
(74) Representative: Eisenführ, Speiser & Partner
(86) International application number: PCT/US2008/084003
(87) International publication number: WO 2009/067496

(56) References cited:
- GB-A- 2 351 424
- US-A- 5 903 916
- US-A1- 2003 061 459

## Description

### TECHNICAL FIELD

This application relates generally to data processing and more specifically, but not exclusively, to scheduling operations.

### BACKGROUND

A data processing system may employ a bidirectional link whereby data interfaces of the link transition between write and read intervals. For example, a memory system may employ a bidirectional data (DQ) link where a memory controller and a memory device drive the link at different times. Through the use of such bidirectional links, a system may more efficiently use the available package pins and provide flexible bandwidth allocation.

In practice, the process of switching between different devices driving a link may produce relatively significant switching currents on the link, even when signaling architectures designed to reduce switching currents (e.g., differential signaling or coded signaling) are employed. To reduce any adverse effects this driver switching-related noise may have on the link, so-called timing "bubbles" may be used whereby data transmission is avoided during a window of time associated with driver turnaround (e.g., from read-to-write, or vice versa). Through the use of such timing "bubbles," noise associated with driver turnaround may have time to settle, thereby reducing the likelihood that the noise will adversely affect data transmission on the link.

The act of switching a driver on and off also may cause switching current to be coupled through a power supply and thereby induce voltage noise on another signal path. In some aspects this voltage noise may degrade receiver voltage margin directly. In some aspects this noise may result in increased timing jitter (or phase noise) in the other signal path because voltage noise on the power supply may affect driver output or receiver input delays as well as clock edge arrival times. Inductive or capacitive coupling between links also may cause crosstalk between a link which is undergoing turnaround and a neighboring link which is not undergoing turnaround. This turnaround-induced voltage noise also may reduce voltage and/or timing margin for other signal paths. One approach for addressing these noise issues involves operating the other signal path at a reduced signal rate and at a higher voltage swing relative to the data path. This approach allows for a greater timing and voltage margins that may, in effect, absorb any degradation in the other signal path due to data path switching noise. However, in some applications it is not desirable to reduce the signal rate or increase the voltage signal swing on a signal path. Hence, there is a need for effective techniques for enabling the use of fast signal rates and/or large voltage signal swing on a signal path.
In patent document US2003/0061459, a technique is disclosed to prevent frequent bus turnaround events by introducing write blockout periods, during which only read operations are performed.

### BRIEF DESCRIPTION OF THE DRAWINGS

Sample features, aspects and advantages of the disclosure will be described in the detailed description and appended claims that follow and the accompanying drawings, wherein:

FIG. 1 is a simplified diagram illustrating an example of scheduling signal transmission to avoid a signal turnaround event;

FIG. 2 is a simplified diagram illustrating an example of signal noise;

FIG. 3 is a flow chart of an embodiment of operations that may be performed by an apparatus to schedule signal transmission to avoid a signal turnaround event;

FIG. 4 is a flow chart of an embodiment of operations that may be performed by an apparatus to delay acting on a received signal that was scheduled to avoid a signal turnaround event;

FIG. 5 is a simplified block diagram of an embodiment of components of apparatuses configured to process signals that are scheduled to avoid a signal turnaround event;

FIG. 6 is a simplified diagram illustrating an example of scheduling signal transmission to avoid a signal turnaround event; and

FIG. 7 is a simplified diagram illustrating an example of scheduling signal transmission to avoid a signal turnaround event.

In accordance with common practice the various features illustrated in the drawings may not be drawn to scale. Accordingly, the dimensions of the various features may be arbitrarily expanded or reduced for clarity. In addition, some of the drawings may be simplified for clarity. Thus, the drawings may not depict all of the components of a given apparatus or method. Finally, like reference numerals may be used to denote like features throughout the specification and figures.

### DETAILED DESCRIPTION

The disclosure relates in some aspects to scheduling transmission of a signal to avoid sending the signal during a specified event associated with another signal. For example, the transmission time for a signal on one channel may be scheduled to avoid a period of time associated with switching of bidirectional signals on another channel.

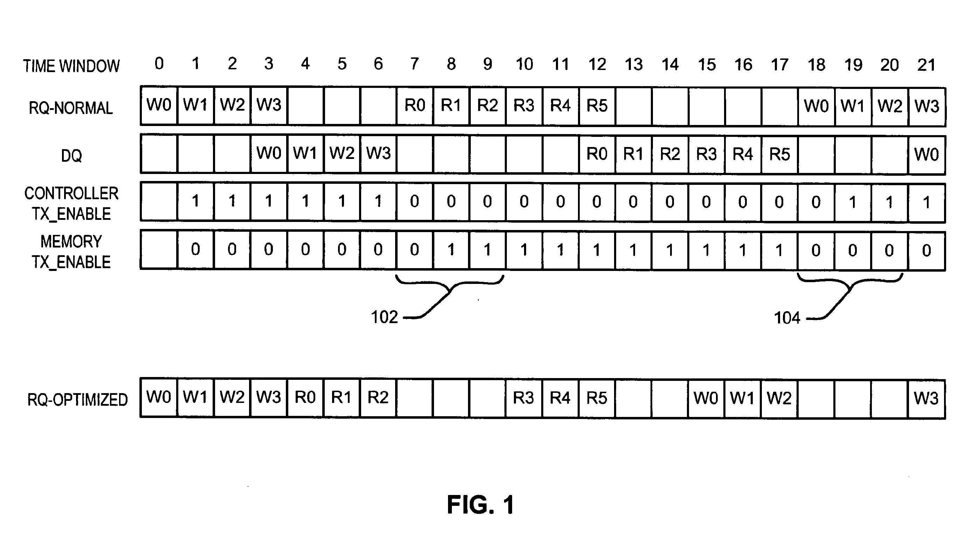

For illustration purposes, various aspects of the disclosure will be described in the context of a memory system where a controller (e.g., a memory controller) schedules the transmission of request (RQ) channel signals on an RQ bus to one or more memory devices or memory modules (hereafter referred to in the specification as "the memory device" for convenience). Specifically, the controller avoids sending the RQ signals during a driver turnaround period (e.g., turnaround window 102 in FIG. 1) corresponding to when a bidirectional memory data (DQ) channel on a DQ bus switches from being driven by the controller to being driven by the memory device, or vice versa. It should be appreciated that the teachings herein may be applicable to other types of signals, components, and systems. Moreover, it should be appreciated that such components may be implemented within other components (e.g., processors or memory modules) and that the teachings herein may be implemented in other types of apparatuses.

FIG. 1 illustrates an example of signal timing that may be used for memory accesses during successive time windows (e.g., timeslots). The DQ channel relates to signals on a bidirectional DQ bus (e.g., data signal path). For example, data writes (e.g., data packets written to the memory device) are represented by W0, W1, etc., and data reads (e.g., data packets read from the memory device) are represented by R0, R1, etc. The Controller TX_ENABLE channel represents transmit enable signals that may be generated at a controller. The Memory TX_ENABLE channel represents transmit enable signals that may be generated at the memory device.

The RQ channel relates to request signals generated by a controller on an RQ bus (e.g., request path). The RQ-Optimized channel represents write requests (e.g., W0, W1, etc.) and read requests (e.g., R0, R1, etc.) that may be generated by a controller in accordance with the teachings herein. For comparison purposes, the RQ-Normal channel represents write requests (e.g., W0, W1, etc.) and read requests (e.g., R0, R1, etc.) that may be generated by a controller in accordance with conventional practice. As shown in FIG. 1, the write requests (e.g., W0) or read requests (e.g., R0) may be sent in advance of the corresponding write data (e.g., W0) or read data (e.g., R0) transmission interval.

As used herein, the terms write request and read request relate to various types of signals (other than data and clock signals) that may be used to access data. Such signals may comprise, for example, address and/or control information (e.g., command/address, "C/A"). For a memory device such as DRAM, such signals may comprise, for example, bank address, row address, column address, opcode, or any combination of these signals. In some implementations, each request (e.g., W0) corresponds to a request packet. As a simplified example, W0 may comprise an activate command and row address packet, W1 may comprise a write command and column address packet, and W3 may comprise a precharge command and bank address packet, and so on.

As shown in FIG. 1, idle cycles (e.g., timeslots) may be introduced on the DQ bus during read-to-write or write-to-read transitions to allow switching noise to settle on the DQ bus. For example, five idle cycles are provided between the last write W3 and the first read R0 on the DQ bus. In addition, idle cycles may be introduced on the RQ bus as a consequence of the idle cycles which have been inserted onto the DQ bus. For example, three idle cycles are provided between the writes W0 - W3 and the reads R0 - R5 on the RQ-Normal bus.

As mentioned above, FIG. 1 illustrates a turnaround window 102 associated with switching the DQ interface from the last write W3 to the first read R0. Specifically, the controller stops driving the DQ bus after time window 6 and the memory device starts driving the DQ bus at time window 8. In a conventional system, it may be observed that the controller may transmit RQ-Normal signals (e.g., R0 - R2) during the turnaround window 102. Hence, noise may be induced on the RQ-Normal signals as a result of turning around the DQ bus.

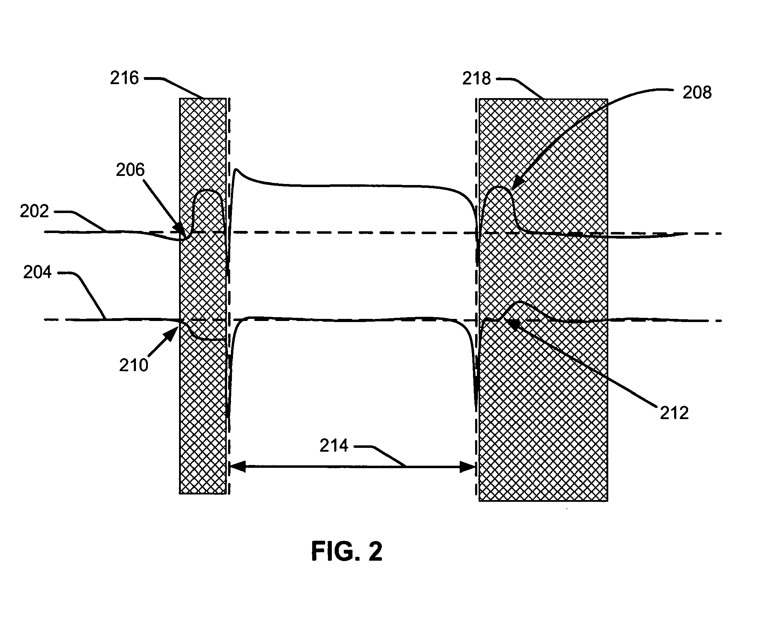

FIG. 2 illustrates an example of signals that may be generated when a driver is turned on and off. Waveform 202 is an example of a differential signal while waveform 204 is an example of a single-ended signal. The driver for the differential signal is turned on and then turned off at the points in time indicated by the arrows 206 and 208, respectively. The driver for the single-ended signal is turned on and then turned off at the points in time indicated by the arrows 210 and 212, respectively. Data is transmitted during a time interval 214. As indicated in FIG. 2, the potential for noise generated as a result of a driver being turned on and off may be relatively high during time windows 216 and 218, respectively.

As used herein, the term driver turnaround window refers to a window of time beginning approximately when one driver (e.g., a data driver) begins to turn off and ending approximately when the noise from another driver turning on has settled sufficiently for reliable transmission. For example, a turnaround window (e.g., turnaround window 102 of FIG. 1) may be defined to cover the potentially noisy time periods (e.g., time windows 218 and 216) associated with one driver being turned off and another driver being turned on as well as the period of time between these potentially noisy time periods.

To prevent the switching currents resulting from these turnaround events from inducing voltage noise onto other signal paths such as an RQ bus, the memory system may be configured to avoid sending requests during the turnaround window. To this end, the memory system may provide request buffer preloading in advance of the turnaround window. Here, the controller may send one or more of the requests early, during otherwise idle cycles. The memory device may then buffer these requests to provide an appropriate delay before the memory device issues the requests internally.

The RQ-Optimized signal of FIG. 1 illustrates an example of how RQ signals may be scheduled to avoid sending any RQ signals during a turnaround window. Here, the first set of write requests (W0 - W3) are transmitted during time windows 0 - 3 as in the RQ-Normal case. However, R0 - R2 of the read request are now transmitted during time windows 4 - 6 and no request signals are transmitted during the turnaround window 102 associated with time windows 7-9. The remaining read requests R3 - R5 are then transmitted during time windows 10 - 12 as in the RQ-Normal case. A similar scheduling scheme is employed for the RQ-Optimized write signals W0 - W2 to avoid transmitting the requests during a turnaround window 104 associated with time windows 18-20.

The use of the above techniques may advantageously reduce susceptibility to noise on a request channel (e.g., the RQ bus). By reducing this noise, the memory system may employ narrower and higher speed request channels. For example, the request channel may be operated at a signaling rate that is comparable to the signaling rate of the data channel (e.g., the data bus). The use of narrower and higher speed request channels may, in turn, enable a reduction in controller pin overhead, enable the use of more request channels, and enable the use of finer access granularity.

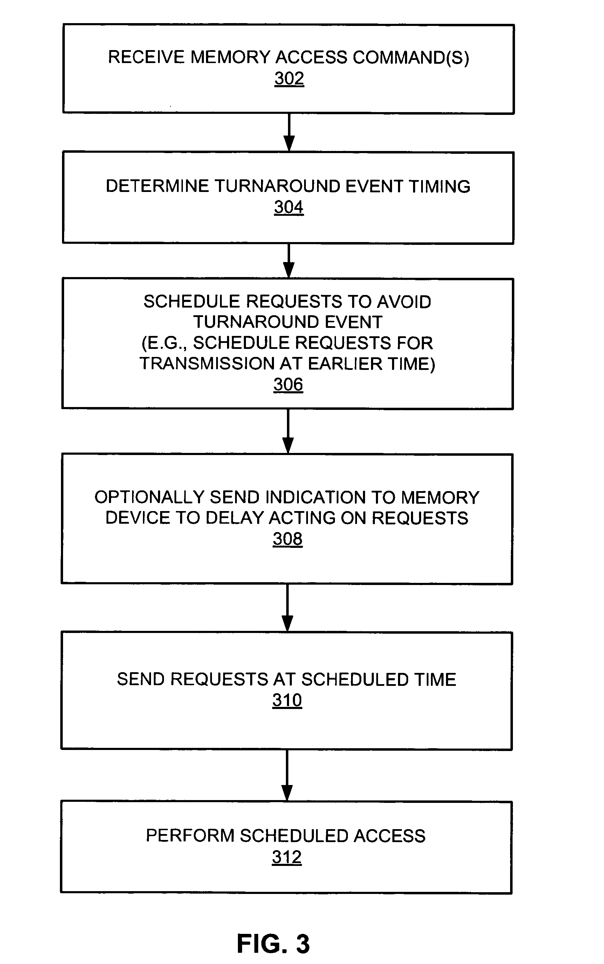

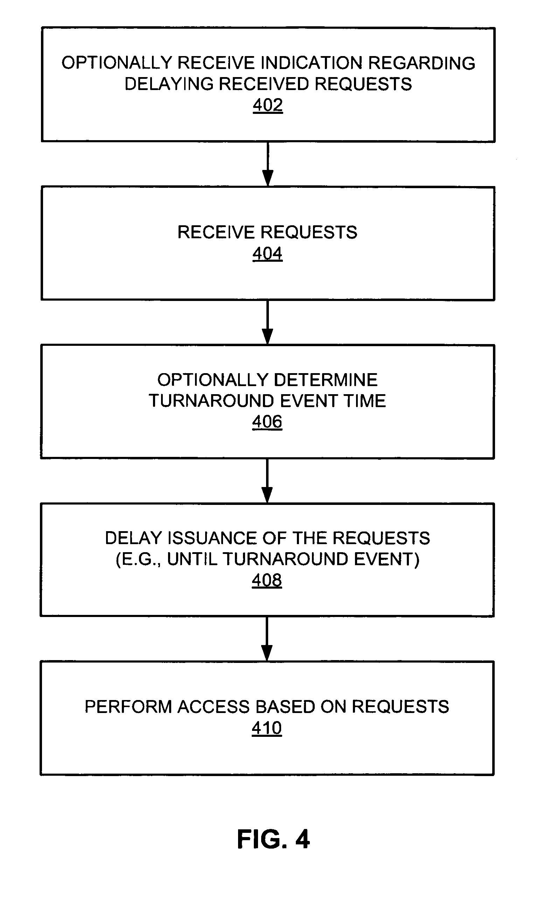

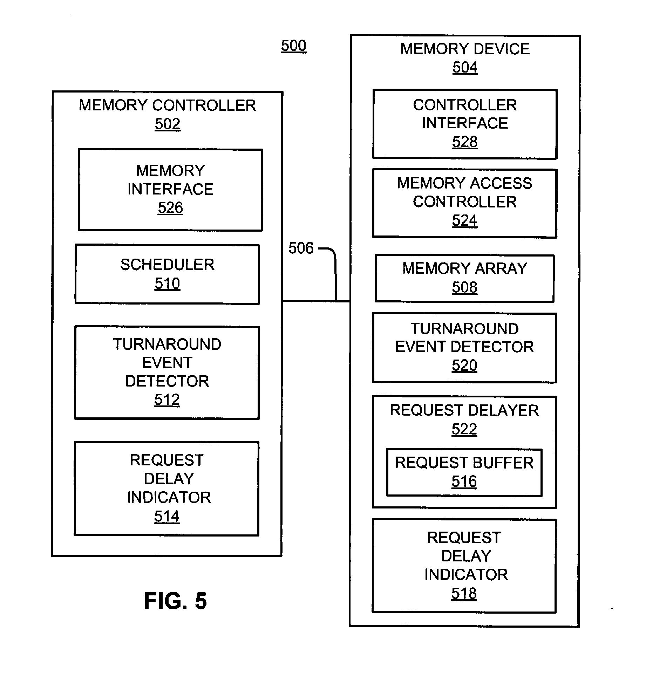

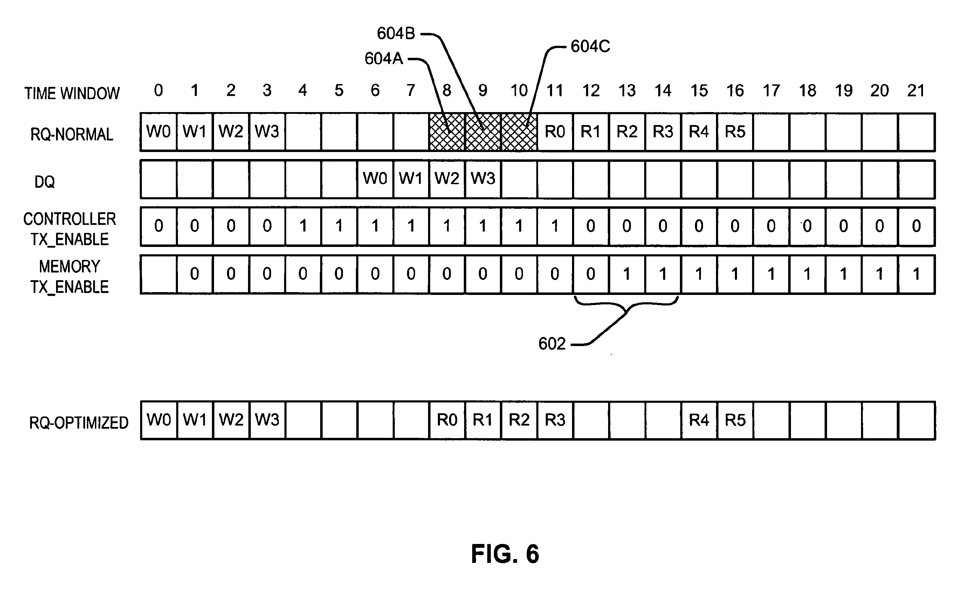

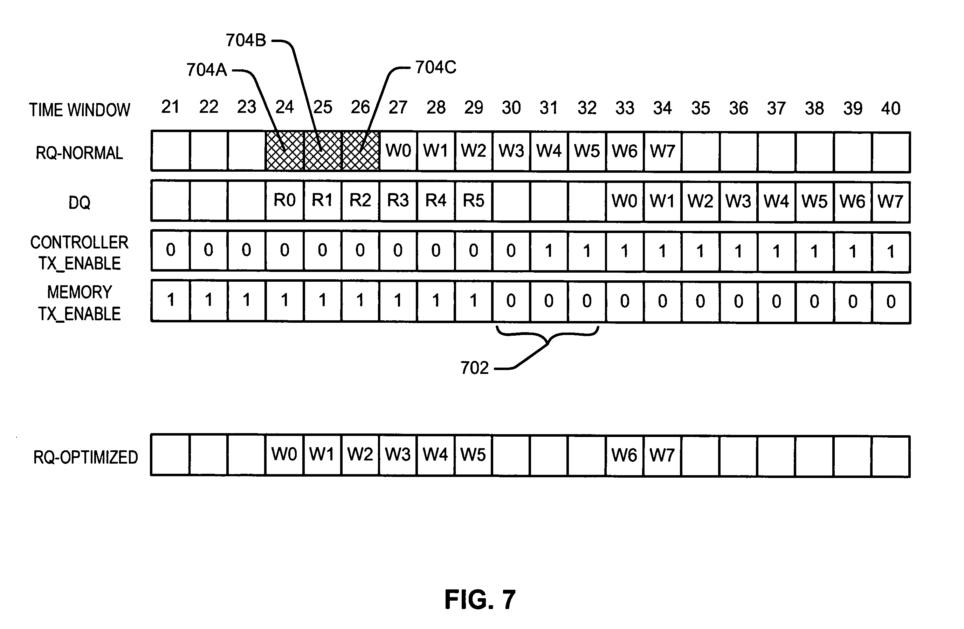

These and other aspects of the disclosure will now be described in more detail in conjunction with FIGS. 3-7. FIG. 3 describes several operations that a controller may perform to schedule requests in accordance with the teachings herein. FIG. 4 describes several operations that a memory device may perform to process the scheduled requests. FIG. 5 illustrates a sample embodiment of a memory system 500 that includes a memory controller 502 and a memory device 504. The memory controller 502 includes a memory interface 526 that is configured to communicate with a controller interface 528 of the memory device 504 via an interconnect 506 (e.g., memory buses including data signal paths, clock signal paths, and control signal paths). FIGS. 6 and 7 illustrate additional examples of memory access signal timing.

For convenience, the operations of FIGS. 3 and 4 (or any other operations discussed or taught herein) may be described as being performed by specific components (e.g., components of the system 500). It should be appreciated, however, that these operations may be performed by other types of components and may be performed using a different number of components. It also should be appreciated that one or more of the operations described herein may not be employed in a given implementation.

As represented by block 302 of FIG. 3, the memory controller 502 receives one or more commands (or other suitable messages) from one or more associated devices (e.g., processors) requesting access to a memory array 508 of the memory device 504. In accordance with conventional practice, the memory controller 502 (e.g., a scheduler 510) may perform operations such as arbitration and scheduling to process these messages and send corresponding requests to the memory device 504 at appropriate times.

In accordance with the teachings herein, the scheduling operations may involve avoiding sending requests during turnaround times by scheduling requests that may otherwise be scheduled during a turnaround window during available request channel timeslots that precede the turnaround event. In some aspects, this may be achieved with appropriate foreknowledge of the read-to-write or write-to-read turnaround event, foreknowledge of one or more of the requests that follow the turnaround event, and foreknowledge of basic timing parameters as discussed below.

As represented by block 304, the memory controller 502 (e.g., a turnaround event detector 512) determines when a turnaround will occur on the DQ bus. For example, in FIG. 6 the scheduler 510 may have previously scheduled writes W0 - W3, whereby the write requests are issued at time windows 0 - 3 and the write data W0- W3 is provided on the DQ bus at time windows 6 - 9. In addition, the scheduler 510 may have determined that a read request will be scheduled next. In this case, the turnaround event detector 512 may determine that a turnaround event 602 (e.g., a turnaround window) will occur at time windows 12-14.

As represented by block 306, the memory controller 502 (e.g., the scheduler 510) schedules the read requests R0 - R5 to avoid the turnaround event 602. As indicated by the RQ-Normal bus, in a conventional system the read requests R0- R5 may be scheduled after the write data W0- W3 is sent over the DQ bus. In such a case, the request signals R1 - R3 may be scheduled during the turnaround event 602 and, as a result, may be subjected to switching noise. In contrast, as indicated by the RQ-Optimized bus, the scheduler 510 may schedule the request signals R0- R3 for transmission before the turnaround event 602. Here, the scheduler 510 may identify several idle cycles (e.g., timeslots 604A - 604C) that occur on the RQ bus due to the idle cycles on the DQ bus following write data W3. The scheduler 510 may then use these idle RQ cycles and the timeslot at time window 11 to schedule the request R0- R3 as shown in the RQ-Optimized bus. The requests R4 and R5 may then be scheduled following the turnaround event 602 (e.g., as in the RQ-Normal case).

FIG. 7 illustrates that similar operations may be performed when the DQ bus transitions from a read to a write. Here, the read data R0 - R5 scheduled at time windows 8 - 11, 15, and 16 is output to the DQ bus at time windows 24 - 29 by the memory device 504. In addition, the scheduler 510 has determined that a write request will be scheduled next. In this case, the turnaround event detector 512 determines that a turnaround event 702 occurs at time windows 30 - 32. The scheduler 510 then schedules the write requests W0- W7 to avoid the turnaround event 702. As indicated by the RQ-Optimized bus, the scheduler 510 may schedule the request signals W0-W5 for transmission before the turnaround event 702 after identifying several idle cycles 704A - 704C. The scheduler 510 may then use these idle RQ cycles and the timeslots at time windows 27 - 29 to schedule the requests W0 - W5. The requests W6 and W7 may then be scheduled following the turnaround event 702. In this case, the memory controller 502 places the write data W0 - W7 on the DQ bus immediately following the turnaround event 702.

Referring again to FIG. 3, as represented by block 308, the memory controller 502 (e.g., a request delay indicator 514) may send an indication to the memory device 504 that instructs the memory device 504 to delay acting on (e.g., issuing) the requests that were scheduled before the turnaround time. Such an indication may be sent to the memory device 504 either before the requests are sent or with one or more of the requests (at block 310). In some implementations the indication may indicate how long (e.g., the number of clock cycles or time windows) the memory device 504 should delay before acting on a given request. Other schemes that may be used to configure the memory device 504 to delay a received request are discussed below.

As represented by block 310, the memory controller 502 (e.g., the scheduler 510) sends the requests at the scheduled times. For example, as shown in FIG. 6, read requests R0- R5 are sent during time windows 8 - 11, 15 and 16.

As represented by block 312, the memory controller 502 then accesses the memory device 504 based on the requests. For example, as shown in FIG. 7, the memory controller 502 receives read data R0- R5 during time windows 24 - 29.

Referring now to FIG. 4, complementary operations that may be performed by the memory device 504 will be discussed in more detail. In some implementations this may involve preloading several requests to a request buffer 516 within the memory device 504 during otherwise idle request cycles in advance of the data turnaround event. By delaying these buffered requests appropriately within the memory device 504, it is possible to issue them within the memory device 504 during the turnaround event on the DQ bus, thereby avoiding degradation of voltage or timing margin on the RQ bus.

As represented by block 402, in some implementations the memory device 504 (e.g., a request delay indicator 518) may receive an indication regarding how one or more requests should be delayed at the memory device 504. For example, as discussed above at block 308, the memory device 504 may receive such an indication either before requests are received or in conjunction with one or more requests (at block 404).

As represented at block 404, the memory device 504 (e.g., a memory access controller 524) receives the requests that were sent by the memory controller 502 at block 310. As described below, the memory device 504 is configured to effectively process requests even when no requests are received during a turnaround event (e.g., where the requests of a given set of requests are separated in time as shown in FIGS. 6 and 7).

As represented at block 406, in some implementations the memory device 504 (e.g., a turnaround event detector 520) may determine the time of the turnaround event associated with a received request. In such a case, the memory device 504 may use the turnaround event time to determine whether a request is delayed and/or the amount of delay. For example, any time the memory device 504 detects a read-to-write transition (or vice versa), the memory device 504 may automatically delay according to a defined delay period (e.g., delay three cycles for three requests). Also, the memory device 504 may detect that there were no incoming requests during the turnaround period (e.g., three cycles) and, as a result, the request buffer 516 should be empty (assuming a depth of three requests). In this case, the memory device 504 will not delay subsequently received request from this set of requests.

As represented at block 408, the memory device 504 (e.g., a request delayer 522) may delay (e.g., delay the issuance of) any requests that were sent early (e.g., before a turnaround event). In some aspects this may involve storing a received request in the request buffer 516 until the time designated for acting on the request.

As mentioned above, in some implementations the memory device 504 receives or is otherwise configured with an indication of how much a given request is to be delayed. For example, in the event this indication is received in a request, the request delayer 522 may delay that request by the delay time indicated in the request. In some cases, a request is delayed so that it is acted on after the beginning of the turnaround event. For example, in FIG. 6, the memory device 504 may act on the request R1 during time window 12 (e.g., a delay of 3 time windows) even though there is no traffic on the RQ bus (RQ-Optimized) at this time.

As represented by block 410, the memory device 504 (e.g., the memory access controller 524) then provides access to the memory array 508 based on the requests. For example, as shown in FIG. 7, the memory device 504 outputs read data R0- R5 during time windows 24 - 29.

The scheduling of requests or other signals as taught herein may be implemented in various ways. For example, as mentioned above various techniques may be used to configure the memory device 504 with information that indicates whether and how long a given request is to be delayed.

In some implementations the memory device 504 (e.g., the request delay indicator 518) comprises a register that is programmed with a value indicative of the delay. In this case, a given request may include an indication (e.g., a bit) that indicates whether this particular request is to be delayed. If so, the memory device 504 may delay the request by the amount of time indicated by the register value.

The memory device 504 may employ embedded rules to determine whether/how to delay received requests. For example, in some implementations the system 500 is configured such that all requests are to be delayed by a designated amount (e.g., 3 cycles). In this case, a given request may include an indication that indicates whether this particular request is to be delayed. If so, the memory device 504 may delay the request by the designated amount.

In some implementations the memory device 504 is configured to not issue a read immediately after a write (or vice versa). In such a case, the memory device 504 may automatically delay such a read or write (e.g., by a defined period of time).

In some aspects, the memory system 500 may employ a memory control protocol that increases (e.g., maximizes) the probability of free request channel timeslots in advance of the turnaround event to optimize the performance of the disclosed scheme. In some aspects this may be achieved through the use of a protocol that provides sufficiently deterministic idle cycles on the RQ bus. For example, it may be relatively easy to move requests to idle cycles when using a protocol that generally provides a 1:1 correspondence between requests and data transfers and that provides a fixed spacing between these requests and data transfers. Conversely, it may be more difficult to move requests to idle cycles when using a protocol that uses a variable number of timeslots for each set of requests, since there may not always be an available idle cycle at the optimum location.

In some aspects, the number of available timeslots may be increased by using fewer request packets to access the memory device. For example, rather than sending several request commands (e.g., separate activate, read/write, and precharge packets), the protocol may send the request as a single command. Here, a command may include a full address (e.g., bank, row, column). In addition, a command may employ implicit timing (e.g., RAS-to-CAS timing (t_{RCD}), precharge-to-activate timing (t_{RP}), auto-precharge). As an example, by using auto-precharge (e.g., the memory device 504 automatically issues a precharge at the end of a read or write), precharge commands need not be sent over the request bus. As a further example, the memory device 504 may include a state machine that is configured to take the row address provided by the single command, immediately issue the activate command, then delay the column by a predetermined timing parameter (e.g., 5 cycles), then issue an auto-precharge at the end. Any timing parameters used in operations such as these may be predefined or may be configurable and stored in a register at the memory device 504.

A memory system also may employ a protocol that provides support for a reduced turnaround noise policy. For example, such a protocol may leave TX on after WR until RD.

The memory controller 502 may thus be configured to support one or more of the above features. For example, the memory controller 502 may provide support for a protocol which maximizes the probability of free request channel timeslots in advance of the turnaround event. The memory controller 502 may include functionality to detect upcoming turnaround events and send requests early with no conflicts. The memory controller 502 may include functionality to indicate to the memory device 504 whether a request is to be buffered/delayed, how many cycles by which it should be delayed, or whether it should be issued immediately.

Similarly, any associated memory devices (or memory modules) may be configured to support one or more of the above features. For example, the memory device 504 may provide support for a protocol which maximizes the probability of free request channel timeslots in advance of the turnaround event. The memory device 504 may include functionality to enable reliable operation with no requests received during the driver turnaround window. The memory device 504 may include functionality for distinguishing between requests which are to be buffered/delayed and those which are to be issued immediately. The memory device 504 may include functionality for optionally buffering multiple requests and delaying the requests appropriately before issuing the requests.

The teachings herein may be advantageously utilized in a variety of memory system architectures. For example, some embodiments may employ a fully differential memory architecture. Such an architecture may employ, for example, differential command/address ("C/A") signals as well as differential data (DQ) signals.

In some implementations a full C/A channel (e.g., an RQ bus) may be provided within a single differential link operating at the DQ rate. For example, the signaling rate of the C/A signals (e.g., request signals) may be comparable to (e.g., equal to) the signaling rate of the DQ signals. In such a case, the teachings herein may be advantageously employed to reduce the noise on such a signal (which may have a very small timing or voltage margin). In addition, a single C/A may be provided per channel. In this way, overhead at the controller may be significantly reduced. Moreover, similar circuit designs may be employed for the C/A and DQ channels, thereby simplifying the overall design. In some implementations the controller may calibrate transmit phase for the C/A channel.

A request packet may be implemented in various ways in accordance with the teachings herein. For example, in some embodiments a 32-bit request packet may be used that provides addressability through 16 Gbit generation, provides 2 nanosecond timing granularity at 16 Gbps, and provides flexible allocation of the bank/row/column address bits.

The teachings herein also may be employed in conjunction with a scalable memory architecture. Such scalability may relate to capacity and access granularity. For example, a controller that provides four C/A links may be configured to provide all four C/A links to one memory device (e.g., with a 32 bit wide DQ bus), configured to provide two C/A links to each of two memory devices (e.g., with 16-bit wide DQ buses), or configured to provide one C/A link to each of four memory devices (e.g., with 8-bit wide DQ buses).

In some implementations the teaching herein may be employed in conjunction with a dynamic point-to-point (DPP) memory architecture. An example of such a memory architecture is disclosed in U. S. Patent Application Publication No. 2004/0221106, the disclosure of which is hereby incorporated by reference herein.

In some implementations, the teachings herein may be employed in conjunction with a configurable point-to-point architecture that allows RQ bandwidth to scale with data (DQ) bandwidth by using similar point-to-point topologies and signaling rates, while allowing capacity scaling with provisions for maintaining constant or low access granularity. An example of such an architecture is described in U.S. Provisional Patent Application No. 60/988,826, Attorney Docket No. RA608.Prov1.US, the disclosure of which is hereby incorporated by reference herein.

The teachings herein may be embodied in a wide variety of forms, some of which may appear to be quite different from those of the disclosed embodiments. Consequently, the specific structural and functional details disclosed herein are merely representative and do not limit the scope of the disclosure. For example, based on the teachings herein one skilled in the art should appreciate that the various structural and functional details disclosed herein may be incorporated in an embodiment independently of any other structural or functional details. Thus, an apparatus may be implemented or a method practiced using any number of the structural or functional details set forth in any disclosed embodiment(s). Also, an apparatus may be implemented or a method practiced using other structural or functional details in addition to or other than the structural or functional details set forth in any disclosed embodiment(s).

A controller device (e.g., an integrated circuit incorporating controller functionality) and a memory device (e.g., an integrated circuit incorporating a memory core) as taught herein may take various forms. For example, a controller device may comprise a memory controller chip, a processor chip that includes controller functionality, or some other suitable device. In some aspects a memory device may comprise a semiconductor integrated circuit device that includes a set of storage cells, which may collectively provide a memory array or a portion of a memory array. Examples of such memory devices include volatile memory devices, nonvolatile memory devices, DRAMs, SRAMs, and flash memory devices.

In some implementations the memory device functionality described herein may be implemented in a memory buffer component of a memory module. In some aspects, a memory buffer may comprise an integrated circuit that is coupled between the memory interface contacts of a memory module and the signaling path for each memory device on the memory module. Examples of memory buffer structure and functionality are described in U.S. Patent Application Publication No. 2007/0070669, the disclosure of which is hereby incorporated by reference herein.

A memory system as taught herein may be used in a variety of applications. For example, such a memory system may be incorporated into a computer graphics card, a videogame console, a printer, a personal computer, a server, or some other apparatus that utilizes data storage.

The various structures and functions described herein may be implemented in various ways and using a variety of apparatuses. For example, a device may be implemented by various hardware components such a processor, a controller, a state machine, logic, or some combination of one or more of these components.

In some embodiments, code including instructions (e.g., software, firmware, middleware, etc.) may be executed on one or more processing devices to implement one or more of the described functions or components. The code and associated components (e.g., data structures and other components by the code or to execute the code) may be stored in an appropriate data memory that is readable by a processing device (e.g., commonly referred to as a computer-readable medium).

The recited order of the blocks in the processes disclosed herein is simply an example of a suitable approach. Thus, operations associated with such blocks may be rearranged while remaining within the scope of the present disclosure. Similarly, the accompanying method claims present operations in a sample order, and are not necessarily limited to the specific order presented.

The components and functions described herein may be connected or coupled in various ways. The manner in which this is done may depend, in part, on whether and how the components are separated from the other components. In some embodiments some of the connections or couplings represented by the lead lines in the drawings may be in an integrated circuit, on a circuit board or implemented as discrete wires, or in some other way.

The signals discussed herein may take various forms. For example, in some embodiments a signal may comprise electrical signals transmitted over a wire, light pulses transmitted through an optical medium such as an optical fiber or air, or RF waves transmitted through a medium such as air, etc. In addition, a plurality of signals may be collectively referred to as a signal herein. The signals discussed above also may take the form of data. For example, in some embodiments an application program may send a signal to another application program. Such a signal may be stored in a data memory.

Also, it should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed there or that the first element must precede the second element in some manner. Also, unless stated otherwise a set of elements may comprise one or more elements.

While certain sample embodiments have been described above in detail and shown in the accompanying drawings, it is to be understood that such embodiments are merely illustrative of and not restrictive of the teachings herein. In particular, it should be recognized that the teachings herein may apply to a wide variety of apparatuses and methods. It will thus be recognized that various modifications may be made to the illustrated and other embodiments as taught herein, without departing from the broad inventive scope thereof. In view of the above it will be understood that the teachings herein are not limited to the particular embodiments or arrangements disclosed, but are rather intended to cover any changes, adaptations or modifications which are within the scope of the appended claims.

## Claims

1. A method, comprising:
determining (304) timing of a driver turnaround time period (102, 104, 602, 702) associated with a bidirectional data signal path (506); and
scheduling (306) transmission of a memory request based on the determined timing, wherein the scheduling (306) of the transmission comprises selecting a time of transmission for the memory request that does not coincide with the driver turnaround time period (102, 104, 602, 702).

2. The method of claim 1, wherein the scheduling (306) of the transmission comprises:
identifying an idle timeslot of a request channel, wherein timing of the idle timeslot precedes the driver turnaround time period (102, 104, 602, 702); and
scheduling transmission of the memory request during the idle timeslot.

3. The method of claim 1, further comprising sending (308) an indication that the memory request is to be delayed.

4. The method of claim 1, wherein the driver turnaround time period (102, 104, 602, 702) relates to:
a transition from a read to a write on the bidirectional data signal path (506); or
a transition from a write to a read on the bidirectional data signal path (506).

5. An apparatus (502), comprising:
a turnaround event detector (512) configured to determine timing of a driver turnaround time period (102, 104, 602, 702) associated with a bidirectional data signal path (506); and
a scheduler (510) configured to schedule transmission of a memory request based on the determined timing, wherein the scheduler (510) is further configured to select a time of transmission for the memory request that does not coincide with the driver turnaround time period (102, 104, 602, 702).

6. The apparatus (502) of claim 5, wherein the scheduler (510) is further configured to:
identify an idle timeslot of a request channel, wherein timing of the idle timeslot precedes the driver turnaround time period (102, 104, 602, 702); and
schedule transmission of the memory request during the idle timeslot.

7. The apparatus (502) of claim 5, further comprising a request delay indicator (514) configured to send an indication that the memory request is to be delayed.

8. The apparatus (502) of claim 5, wherein the driver turnaround time period (102, 104, 602, 702) relates to:
a transition from a read to a write on the bidirectional data signal path (506); or
a transition from a write to a read on the bidirectional data signal path (506).

9. A method comprising:
receiving (404) a memory request that is scheduled to not coincide with a turnaround event (102, 104, 602, 702) associated with a bidirectional data signal path (506), wherein the memory request is received before the turnaround event (102, 104, 602, 702); and
delaying (408) the memory request.

10. The method of claim 9, further comprising detecting (406) the turnaround event (102, 104, 602, 702), wherein the memory request is delayed as a result of the detection.

11. The method of claim 9, further comprising receiving (402) an indication that the memory request is to be delayed, wherein the delaying (408) is based on the indication.

12. The method of claim 9, wherein the delaying (408) is based on a predefined delay period.

13. The method of claim 9, further comprising determining (406) timing of the turnaround event (102, 104, 602, 702), wherein the delaying (408) is based on the determined timing.

14. The method of claim 9, further comprising detecting the turnaround event (102, 104, 602, 702), wherein the delaying (408) of the memory request causes the memory request to be acted on after turnaround event (102, 104, 602, 702) commences.

15. The method of claim 9, wherein the turnaround event (102, 104, 602, 702) relates to a driver turnaround time period (102, 104, 602, 702) for the bidirectional signal path (506).

16. An apparatus (504), comprising:
a memory access controller (524) configured to receive a memory request that is scheduled to not coincide with a turnaround event (102, 104, 602, 702) associated with a bidirectional data signal path (506), wherein the memory request is received before the turnaround event (102, 104, 602, 702); and
a request delayer (522) configured to delay the memory request.

17. The apparatus (504) of claim 16, further comprising a turnaround event detector (520) configured to detect the turnaround event (102, 104, 602, 702), wherein the memory request is delayed as a result of the detection.

18. The apparatus (504) of claim 16, further comprising a request delay indicator (518) configured to receive an indication that the memory request is to be delayed, wherein the request delayer (522) is further configured to delay based on the indication.

19. The apparatus (504) of claim 16, wherein the request delayer (522) is further configured to delay based on a predefined delay period.

20. The apparatus (504) of claim 16, further comprising a turnaround event detector (520) configured to determine timing of the turnaround event (102, 104, 602, 702), wherein the request delayer (522) is further configured to delay based on the determined timing.

21. The apparatus (504) of claim 16, further comprising a turnaround event detector (520) configured to detect the turnaround event (102, 104, 602, 702), wherein the delaying of the memory request causes the memory request to be acted on after the turnaround event (102, 104, 602, 702) commences.

22. The apparatus (504) of claim 16, wherein the turnaround event (102, 104, 602, 702) relates to a driver turnaround time period (102, 104, 602, 702) for the bidirectional signal path (506).

## Patentansprüche

1. Verfahren, umfassend:
Bestimmen (304) des Timings einer Treiber-Umschaltungszeitperiode (102, 104, 602, 702), die mit einem bidirektionalen Datensignalpfad (506) assoziiert ist; und
Planen (306) der Übertragung einer Speicheranforderung auf der Grundlage des bestimmten Timings, wobei das Planen (306) der Übertragung Auswählen einer Übertragungszeit für die Speicheranforderung umfasst, die nicht mit der Treiber-Umschaltungsperiode (102, 104, 602, 702) zusammenfällt.

2. Das Verfahren nach Anspruch 1, wobei das Planen (306) der Übertragung umfasst:
Identifizieren eines freien Zeitschlitzes eines Anforderungskanals, wobei das Timing des freien Zeitschlitzes der Treiber-Umschaltungszeitperiode (102, 104, 602, 702) vorausgeht; und
Planen der Übertragung der Speicheranforderung während des freien Zeitschlitzes.

3. Das Verfahren nach Anspruch 1, weiter umfassend Senden (308) einer Indikation, dass die Speicheranforderung zu verzögern ist.

4. Das Verfahren nach Anspruch 1, wobei die Treiber-Umschaltungszeitperiode (102, 104, 602, 702) entspricht:
einem Übergang von einem Lese- zu einem Schreibzustand auf dem bidirektionalen Datensignalpfad (506); oder
einem Übergang von einem Schreib- zu einem Lesezustand auf dem bidirektionalen Datensignalpfad (506).

5. Vorrichtung (502), umfassend:
einen Umschaltungsereignis-Detektor (512), der konfiguriert ist, ein Timing einer Treiber-Umschaltungszeitperiode (102, 104, 602, 702), die mit einem bidirektionalen Datensignalpfad (506) assoziiert ist, zu bestimmen; und
einen Scheduler (510), der konfiguriert ist, eine Übertragung einer Speicheranforderung, auf dem bestimmten Timing basierend, zu planen, wobei der Scheduler (510) weiter konfiguriert ist, eine Übertragungszeit für die Speicheranforderung auszuwählen, die nicht mit der Treiber-Umschaltungszeitperiode (102, 104, 602, 702) zusammenfällt.

6. Die Vorrichtung (502) nach Anspruch 5, wobei der Scheduler (510) weiter konfiguriert ist, um:
einen freien Zeitschlitz eines Anforderungskanals zu identifizieren, wobei das Timing des freien Zeitschlitzes der Treiber-Umschaltungszeitperiode (102, 104, 602, 702) vorausgeht; und
eine Übertragung der Speicheranforderung während des freien Zeitschlitzes zu planen.

7. Die Vorrichtung (502) nach Anspruch 5, weiter umfassend einen Anforderungsverzögerungs-Indikator (514), der konfiguriert ist, eine Indikation zu senden, dass die Speicheranforderung zu verzögern ist.

8. Die Vorrichtung (502) nach Anspruch 5, wobei die Treiber-Umschaltungszeitperiode (102, 104, 602, 702) entspricht:
einem Übergang von einem Lese- zu einem Schreibzustand auf dem bidirektionalen Datensignalpfad (506); oder
einem Übergang von einem Schreib- zu einem Lesezustand auf dem bidirektionalen Datensignalpfad (506).

9. Verfahren, umfassend:
Empfangen (404) einer Speicheranforderung, die so geplant ist, dass sie nicht mit einem Umschaltungsereignis (102, 104, 602, 702), das mit einem bidirektionalen Datensignalpfad (506) assoziiert ist, zusammenfällt, wobei die Speicheranforderung vor dem Umschaltungsereignis (102, 104, 602, 702) empfangen wird; und
Verzögern (408) der Speicheranforderung.

10. Das Verfahren nach Anspruch 9, weiter umfassend Detektieren (406) des Umschaltungsereignisses (102, 104, 602, 702), wobei die Speicheranforderung als Ergebnis der Detektion verzögert wird.

11. Das Verfahren nach Anspruch 9, weiter umfassend Empfangen (402) eines Indikators, dass die Speicheranforderung zu verzögern ist, wobei das Verzögern (408) auf dem Indikator basiert.

12. Das Verfahren nach Anspruch 9, wobei das Verzögern (408) auf einer vorbestimmten Verzögerungsperiode basiert.

13. Das Verfahren nach Anspruch 9, weiter umfassend Bestimmen (406) des Timings des Umschaltungsereignisses (102, 104, 602, 702), wobei das Verzögern (408) auf dem bestimmten Timing basiert.

14. Das Verfahren nach Anspruch 9, weiter umfassend Detektieren des Umschaltungsereignisses (102, 104, 602, 702), wobei das Verzögern (408) von der Speicheranforderung bewirkt, dass auf die Speicheranforderung reagiert wird, nachdem das Umschaltungsereignis (102, 104, 602, 702) beginnt.

15. Das Verfahren nach Anspruch 9, wobei das Umschaltungsereignis (102, 104, 602, 702) einer Treiber-Umschaltungszeitperiode (102, 104, 602, 702) des bidirektionalen Datensignalpfades (506) entspricht.

16. Vorrichtung (504), umfassend:
einen Speicherzugriffscontroller (524), der konfiguriert ist, eine Speicheranforderung zu empfangen, die so geplant ist, dass sie nicht mit einem Umschaltungsereignis (102, 104, 602, 702), das mit einem bidirektionalen Datensignalpfad (506) assoziiert ist, zusammenfällt, wobei die Speicheranforderung vor dem Umschaltungsereignis (102, 104, 602, 702) empfangen wird; und
einen Anforderungsverzögerer (522), der konfiguriert ist, die Speicheranforderung zu verzögern.

17. Die Vorrichtung (504) nach Anspruch 16, weiter umfassend einen Umschaltungsereignis-Detektor (520), der konfiguriert ist, das Umschaltungsereignis (102, 104, 602, 702) zu detektieren, wobei die Speicheranforderung als Ergebnis der Detektion verzögert wird.

18. Die Vorrichtung (504) nach Anspruch 16, weiter umfassend einen Anforderungsverzögerungs-Indikator (518), der konfiguriert ist, eine Indikation zu empfangen, dass die Speicheranforderung zu verzögern ist, wobei der Anforderungsverzögerer (522) weiter so konfiguriert ist, dass er, auf dem Indikator basierend, verzögert.

19. Die Vorrichtung (504) nach Anspruch 16, wobei der Anforderungsverzögerer (522) weiter so konfiguriert ist, dass er, auf einer vorbestimmten Verzögerungsperiode basierend, verzögert.

20. Die Vorrichtung (504) nach Anspruch 16, weiter umfassend einen Umschaltungsereignis-Detektor (520), der konfiguriert ist, ein Timing des Umschaltungsereignisses (102, 104, 602, 702) zu bestimmen, wobei der Anforderungsverzögerer (522) weiter so konfiguriert ist, dass er, auf dem bestimmten Timing basierend, verzögert.

21. Die Vorrichtung (504) nach Anspruch 16, weiter umfassend einen Umschaltungsereignis-Detektor (520), der konfiguriert ist, das Umschaltungsereignis (102, 104, 602, 702) zu detektieren, wobei das Verzögern von der Speicheranforderung bewirkt, dass auf die Speicheranforderung reagiert wird, nachdem das Umschaltungsereignis (102, 104, 602, 702) beginnt.

22. Die Vorrichtung (504) nach Anspruch 16, wobei das Umschaltungsereignis (102, 104, 602, 702) einer Treiber-Umschaltungsperiode (102, 104, 602, 702) des bidirektionalen Datensignalpfades (506) entspricht.

## Revendications

1. Procédé comprenant les opérations consistant à :
déterminer (304) les instants d'apparition d'une période de commutation d'étage de commande (102, 104, 602, 702) associée à un chemin de signal de données bidirectionnel (506) et
programmer (306) la transmission d'une requête de mémoire en se fondant sur les instants d'apparition déterminés, la programmation (306) de la transmission comprenant la sélection d'un instant de transmission de la requête de mémoire qui ne coïncide pas avec la période de commutation d'étage de commande (102, 104, 602, 702).

2. Procédé selon la revendication 1, dans lequel la programmation (306) de la transmission comprend les opérations consistant à :
identifier un intervalle de temps de repos d'un canal de requête, les instants d'apparition de l'intervalle de temps de repos précédant la période de commutation d'étage de commande (102, 104, 602, 702) et
programmer la transmission de la requête de mémoire pendant l'intervalle de temps de repos.

3. Procédé selon la revendication 1, comprenant en outre l'opération consistant à envoyer (308) une indication selon laquelle la requête de mémoire doit être retardée.

4. Procédé selon la revendication 1, dans lequel la période de commutation (102, 104, 602, 702) concerne :
une transition d'une lecture vers une écriture sur le chemin de signal de données bidirectionnel (506) ; ou
une transition d'une écriture vers une lecture sur le chemin de signal de données bidirectionnel (506).

5. Appareil (502) comprenant :
un détecteur d'événement de commutation (512) configuré pour déterminer les instants d'apparition d'une période de commutation (102, 104, 602, 702) associée à un chemin de signal de données bidirectionnel (506) ; et
un programmateur (510) configuré pour programmer la transmission d'une requête de mémoire en se fondant sur les instants d'apparition déterminés, le programmateur (510) étant en outre configuré pour sélectionner un instant de transmission de la requête de mémoire qui ne coïncide pas avec la période de commutation (102, 104, 602, 702).

6. Appareil (502) selon la revendication 5, dans lequel le programmateur (510) est en outre configuré pour :
identifier un intervalle de temps de repos d'un canal de requête, les instants d'apparition de l'intervalle de temps de repos précédant la période de commutation d'étage de commande (102, 104, 602, 702) ; et
programmer la transmission de la requête de mémoire pendant l'intervalle de temps de repos.

7. Appareil (502) selon la revendication 5, comprenant en outre un indicateur de retard de requête (514) configuré pour envoyer une indication selon laquelle la requête de mémoire doit être retardée.

8. Appareil (502) selon la revendication 5, dans lequel la période de commutation d'étage de commande (102, 104, 602, 702) concerne :
une transition d'une lecture vers une écriture sur le chemin de signal de données bidirectionnel (506) ; ou
une transition d'une écriture vers une lecture sur le chemin de signal de données bidirectionnel (506).

9. Procédé comprenant les opérations consistant à :
recevoir (404) une requête de mémoire qui est programmée pour ne pas coïncider avec un événement de commutation (102, 104, 602, 702) associé à un chemin de signal de données bidirectionnel (506), la requête de mémoire étant reçue avant l'événement de commutation (102, 104, 602, 702) ; et
retarder (408) la requête de mémoire.

10. Procédé selon la revendication 9, comprenant en outre l'opération consistant à détecter (406) l'événement de commutation (102, 104, 602, 702), la requête de mémoire étant retardée en cas de détection.

11. Procédé selon la revendication 9, comprenant en outre l'opération consistant à recevoir (402) une indication selon laquelle la requête de mémoire doit être retardée, le retardement (408) reposant sur l'indication.

12. Procédé selon la revendication 9, dans lequel le retardement (408) repose sur une période de retard définie.

13. Procédé selon la revendication 9, comprenant en outre l'opération consistant à déterminer (406) les instants d'apparition de l'événement de commutation (102, 104, 602, 702), le retardement (408) reposant sur les instants d'apparition déterminés.

14. Procédé selon la revendication 9, comprenant en outre l'opération consistant à détecter l'événement de commutation (102, 104, 602, 702), le retardement (408) de la requête de mémoire ayant pour effet que la requête de mémoire est opérante après que l'événement de commande (102, 104, 602, 702) s'est produit.

15. Procédé selon la revendication 9, dans lequel l'événement de commutation (102, 104, 602, 702) concerne une période de commutation d'étage de commande (102, 104, 602, 702) pour le chemin de signal bidirectionnel (506).

16. Appareil (504), comprenant :
un contrôleur d'accès mémoire (524) configuré pour recevoir une requête de mémoire qui est programmée pour ne pas coïncider avec un événement de commutation (102, 104, 602, 702) associé à un chemin de signal de données bidirectionnel (506), la requête de mémoire étant reçue avant l'événement de commutation (102, 104, 602, 702) ; et
un retardateur de requête (522) configuré pour retarder la requête de mémoire.

17. Appareil (504) selon la revendication 16, comprenant en outre un détecteur d'événement de commutation (520) configuré pour détecter l'événement de commutation (102, 104, 602, 702), la requête de mémoire étant retardée en cas de détection.

18. Appareil (504) selon la revendication 16, comprenant en outre un indicateur de retard de requête (518) configuré pour recevoir une indication selon laquelle la requête de mémoire doit être retardée, le retardateur de requête (522) étant en outre configuré pour effectuer un retard en se fondant sur l'indication.

19. Appareil (504) selon la revendication 16, dans lequel le retardateur de requête (522) est en outre configuré pour effectuer un retard en se fondant sur une période de retard prédéfinie.

20. Appareil (504) selon la revendication 16, comprenant en outre un détecteur d'événement de commutation (520) configuré pour déterminer les instants d'apparition de l'événement de commutation (102, 104, 602, 702), le retardateur de requête (522) étant en outre configuré pour effectuer un retard en se fondant sur les instants d'apparition déterminés.

21. Appareil (504) selon la revendication 16, comprenant en outre un détecteur d'événement de commutation (520) configuré pour détecter l'événement de commutation (102, 104, 602, 702), le retardement de la requête de mémoire ayant pour effet que la requête de mémoire est opérante après que l'événement de commutation (102, 104, 602, 702) s'est produit.

22. Appareil (504) selon la revendication 16, dans lequel l'événement de commutation (102, 104, 602, 702) concerne une période de commutation d'étage de commande (102, 104, 602, 702) pour le chemin de signal bidirectionnel (506).
